# EUROPEAN PATENT SPECIFICATION

(11) **EP 4 274 329 B1**
(45) Date of publication and mention of the grant of the patent: **08.07.2026**
(21) Application number: 20967438.1
(22) Date of filing: 29.12.2020
(51) Int. Cl.: H04W 68/00, H04W 52/02

(54) **INFORMATION RECEIVING METHOD, INFORMATION SENDING METHOD, AND COMMUNICATION APPARATUS**
INFORMATIONSEMPFANGSVERFAHREN, INFORMATIONSSENDEVERFAHREN UND KOMMUNIKATIONSVORRICHTUNG
PROCÉDÉ DE RÉCEPTION D'INFORMATIONS, PROCÉDÉ D'ENVOI D'INFORMATIONS ET APPAREIL DE COMMUNICATION

(43) Date of publication of application: 08.11.2023
(73) Proprietor: Huawei Technologies Co., Ltd., Shenzhen, Guangdong 518129 (CN)
(72) Inventor: XIN, Tingyu, Shenzhen, Guangdong 518129 (CN); LI, Bingzhao, Shenzhen, Guangdong 518129 (CN); CHEN, Lei, Shenzhen, Guangdong 518129 (CN)
(74) Representative: Epping - Hermann - Fischer
(86) International application number: PCT/CN2020/140992
(87) International publication number: WO 2022/141090

(56) References cited:
- WO-A1-2020/108405
- WO-A1-2020/220239
- CN-A- 101 557 408
- CN-A- 104 704 895
- CN-A- 110 753 387
- CN-A- 111 225 433
- US-A1- 2020 163 021
- US-A1- 2020 367 199
- US-A1- 2022 022 281

## Description

### TECHNICAL FIELD

Embodiments of this application relate to the communication field, and in particular, to an information receiving method, an information sending method, and a communication apparatus.

### BACKGROUND

In a wireless communication system, a network device (for example, a core network or a base station) may notify, via a paging (paging) message, a terminal device that a service arrives. Correspondingly, the terminal device determines, by receiving the paging message, whether the paging message includes information related to the terminal device, for subsequent service processing. Specifically, the terminal device may first detect downlink control information (downlink control information, DCI), where the DCI indicates information such as a radio resource carrying the paging message and a used modulation and coding scheme. Then, the terminal device receives the paging message based on the detected DCI, and determines, based on content in the paging message, whether the paging message is related to the terminal device, for example, whether the paging message includes identification information of the terminal device, or whether the paging message includes identification information of a service in which the terminal device is interested. If determining that the paging message is related to the terminal device, the terminal device subsequently performs service processing based on the paging message.

When the network device notifies the terminal device that there is a multicast broadcast service (Multicast Broadcast Service, MBS), a mechanism similar to the foregoing paging mechanism may also be used. Specifically, for example, an MBS indication may be included in the DCI, or identification information related to the MBS, for example, a temporary mobile group identity (temporary mobile group identity, TMGI), may be included in the paging message. However, even if the paging message pages only the MBS, a terminal device that is not interested in the MBS still needs to read the DCI, and determines, based on the MBS indication in the DCI, that the paging is irrelevant to the terminal device. The terminal device even needs to read the DCI and the paging message, and determines, based on the identification information and the like in the paging message, that the paging is irrelevant to the terminal device. Therefore, in the foregoing paging mechanism, power consumption of the terminal device that is not interested in the MBS increases, affecting battery life of the terminal device.

WO 2020/108405 A1 discloses an information processing method and an information processing apparatus. A specific time when downlink control information is issued in a beam is be pre-learned according to a previous beam, and then the downlink control information is detected only at the specific time when the downlink control information is issued, detected by means of the previous beam, thereby accurately controlling the detection of the downlink control information, avoiding blind detection of the downlink control information, so as to save power

WO 2020/220239 A1 discloses a method and apparatus for controlling a terminal to receive information, and a terminal, the method comprising: a terminal receiving a wake-up configuration parameter sent by a network device; the terminal determining whether to activate the wake-up configuration parameter; and if activating the wake-up configuration parameter, the terminal monitoring a first PDCCH having a wake-up function according to the wake-up configuration parameter.

US 2020/367199 A1 discloses a method including receiving, by a user equipment, a signal either before or during a paging occasion comprising an indication indicating whether the user equipment is to skip decoding of at least one subsequent channel of a plurality of subsequent channels associated with a paging message. The plurality of subsequent channels include: a first channel carrying downlink control information for the paging message, and a second channel carrying the paging message. In response to the indication indicating that the user equipment is to skip decoding of the at least one subsequent channel, skipping decoding of the at least one subsequent channel.

### SUMMARY

The invention is defined in the claims. In the following, parts of the description and drawings referring to embodiments which are not covered by the claims are not presented as embodiments of the invention, but as examples useful for understanding the invention.

Embodiments of this application relate to the communication field, and provide an information receiving method, an information sending method, and a communication apparatus, to reduce power consumption of a terminal device. According to a first aspect, an embodiment of this application provides an information receiving method, including: determining that a service state is a unicast service state; determining, based on the service state, to detect a first wake-up signal; and receiving first information in response to the detected first wake-up signal.

In this embodiment of this application, the wake-up signal is used, and the wake-up signal is related only to a unicast service, to reduce unnecessary power consumption of a terminal device in another service state.

In a possible design, the method further includes: determining that the service state includes a multicast service state and/or a broadcast service state; determining, based on the service state, not to detect the first wake-up signal; and detecting the first information.

The wake-up signal is used, and the wake-up signal is related only to a unicast service, to reduce unnecessary power consumption of a terminal device in the multicast service state and/or the broadcast service state.

In a possible design, the method further includes: determining that the service state includes a multicast service state and/or a broadcast service state; determining, based on the service state, to detect a second wake-up signal; and detecting the first information in response to the detected second wake-up signal.

The wake-up signal associated with the service state including the multicast service state and/or the broadcast service state is used, to reduce unnecessary power consumption of a terminal device whose service state includes the multicast service state and/or the broadcast service state.

In a possible design, the method further includes: determining, based on the service state, to detect the first wake-up signal; and detecting the first information in response to the detected first wake-up signal.

In a possible design, the method further includes: determining that the service state includes a broadcast service state; determining, based on the service state, to detect a third wake-up signal; and detecting the first information in response to the detected third wake-up signal.

Wake-up signals are further refined, so that power consumption of a terminal device in different service states can be reduced.

In a possible design, the method further includes: determining to detect the first wake-up signal and/or a second wake-up signal; and detecting the first information in response to the detected first wake-up signal or second wake-up signal.

In a possible design, the second wake-up signal belongs to a set of second wake-up signals, and the set of second wake-up signals includes at least two second wake-up signals, where each second wake-up signal in the set of second wake-up signals is associated with one service attribute in a set of service attribute information and is used to indicate to receive the first information, the set of service attribute information includes one set of the following: a set of service identity information, a set of service type information, a set of quality of service QoS requirement information, or a set of service notification frequency information, and the set of service attribute information includes at least two pieces of service attribute information; and the determining, based on the service state, to detect a second wake-up signal includes: determining, based on the service attribute information, to detect the second wake-up signal associated with the service attribute information; and detecting the first information in response to the detected second wake-up signal associated with the service attribute information.

Wake-up signals are further refined and grouped, so that power consumption of a terminal device in different service states can be reduced.

In a possible design, the first information indicates service notification information.

In a possible design, that the first information indicates service notification information includes: the first information indicates a to-be-notified service type, where
the to-be-notified service type includes only a broadcast service or a multicast service;
the to-be-notified service type includes a broadcast service or a multicast service, and/or a unicast service;
the to-be-notified service type includes at least one of the following: a broadcast service, a multicast service, or a unicast service; or
the to-be-notified service type includes at least one of the following: a broadcast service, at least one multicast service in a set of multicast services, or a unicast service, where each service in the set of multicast services is associated with one service attribute in the set of service attribute information; and
the method further includes: receiving the first information, and receiving the service notification information when a first condition is met, where the first condition includes that the service state matches the to-be-notified service type.

It may be understood that for beneficial effects of the following aspects and possible designs, refer to the first aspect. Details are not described.

According to a second aspect, an embodiment of this application provides an information sending method, including: determining that a to-be-notified service type includes a unicast service; and determining, based on the to-be-notified service type, to send a first wake-up signal and first information, where the first wake-up information is corresponding to the first information.

In a possible design, the method further includes: determining that the to-be-notified service type includes a multicast service and/or a broadcast service; determining, based on the to-be-notified service type, not to send the first wake-up signal; and sending the first information.

In a possible design, the method further includes: determining that the to-be-notified service type includes a multicast service and/or a broadcast service; and determining, based on the to-be-notified service type, to send a second wake-up signal and the first information, where the second wake-up information is corresponding to the first information In a possible design, the method further includes: determining that the to-be-notified service type includes a broadcast service; and determining, based on the to-be-notified service type, to send a third wake-up signal and the first information

In a possible design, the second wake-up signal belongs to a set of second wake-up signals, and the set of second wake-up signals includes at least two second wake-up signals, where each second wake-up signal in the set of second wake-up signals is associated with one service attribute in a set of service attribute information and is used to indicate the first information, the set of service attribute information includes one set of the following: a set of service identity information, a set of service type information, a set of quality of service QoS requirement information, or a set of service notification frequency information, and the set of service attribute information includes at least two pieces of service attribute information; and the determining, based on the to-be-notified service type, to send a second wake-up signal and the first information includes: determining, based on the service attribute information, to send the first information and the second wake-up signal associated with the service attribute information.

In a possible design, the first information indicates service notification information.

In a possible design, that the first information indicates service notification information includes: the first information indicates the to-be-notified service type, where
the to-be-notified service type includes only the broadcast service or the multicast service;
the to-be-notified service type includes the broadcast service or the multicast service, and/or the unicast service;
the to-be-notified service type includes at least one of the following: the broadcast service, the multicast service, or the unicast service; or
the to-be-notified service type includes at least one of the following: the broadcast service, at least one multicast service in a set of multicast services, or the unicast service, where each service in the set of multicast services is associated with one service attribute in the set of service attribute information.

According to a third aspect, an embodiment of this application provides an information receiving apparatus, including: a processing unit, configured to: determine that a service state is a unicast service state; and determine, based on the service state, to detect a first wake-up signal; and a transceiver unit, configured to receive first information in response to the detected first wake-up signal.

In a possible design, the processing unit is configured to: determine that the service state includes a multicast service state and/or a broadcast service state; and determine, based on the service state, not to detect the first wake-up signal; and the transceiver unit is configured to detect the first information.

In a possible design, the processing unit is configured to: determine that the service state includes a multicast service state and/or a broadcast service state; and determine, based on the service state, to detect a second wake-up signal; and the transceiver unit is configured to detect the first information in response to the detected second wake-up signal. In a possible design, the processing unit is configured to determine, based on the service state, to detect the first wake-up signal; and the transceiver unit is configured to detect the first information in response to the detected first wake-up signal.

In a possible design, the processing unit is configured to: determine that the service state includes a broadcast service state; and determine, based on the service state, to detect a third wake-up signal; and the transceiver unit is configured to detect the first information in response to the detected third wake-up signal.

In a possible design, the processing unit is configured to determine to detect the first wake-up signal and/or a second wake-up signal; and the transceiver unit is configured to detect the first information in response to the detected first wake-up signal or second wake-up signal.

In a possible design, the second wake-up signal belongs to a set of second wake-up signals, and the set of second wake-up signals includes at least two second wake-up signals, where each second wake-up signal in the set of second wake-up signals is associated with one service attribute in a set of service attribute information and is used to indicate to receive the first information, the set of service attribute information includes one set of the following: a set of service identity information, a set of service type information, a set of quality of service QoS requirement information, or a set of service notification frequency information, and the set of service attribute information includes at least two pieces of service attribute information; and
the determining, based on the service state, to detect a second wake-up signal includes: determining, based on the service attribute information, to detect the second wake-up signal associated with the service attribute information; and detecting the first information in response to the detected second wake-up signal associated with the service attribute information.

In a possible design, the first information indicates service notification information.

In a possible design, that the first information indicates service notification information includes: the first information indicates a to-be-notified service type, where
the to-be-notified service type includes only a broadcast service or a multicast service;
the to-be-notified service type includes a broadcast service or a multicast service, and/or a unicast service;
the to-be-notified service type includes at least one of the following: a broadcast service, a multicast service, or a unicast service; or
the to-be-notified service type includes at least one of the following: a broadcast service, at least one multicast service in a set of multicast services, or a unicast service, where each service in the set of multicast services is associated with one service attribute in the set of service attribute information; and
the transceiver unit is configured to: receive the first information; and receive the service notification information when a first condition is met, where the first condition includes that the service state matches the to-be-notified service type.

According to a fourth aspect, an embodiment of this application provides an information sending apparatus, including: a processing unit, configured to: determine that a to-be-notified service type includes a unicast service; and determine, based on the to-be-notified service type, to send a first wake-up signal and first information, where the first wake-up information is corresponding to the first information.

In a possible design, the processing unit is configured to: determine that the to-be-notified service type includes a multicast service and/or a broadcast service; and determine, based on the to-be-notified service type, not to send the first wake-up signal; and the apparatus further includes a transceiver unit, configured to send the first information. In a possible design, the processing unit is configured to: determine that the to-be-notified service type includes a multicast service and/or a broadcast service; and determine, based on the to-be-notified service type, to send a second wake-up signal and the first information, where the second wake-up information is corresponding to the first information.

In a possible design, the processing unit is configured to: determine that the to-be-notified service type includes a broadcast service; and determine, based on the to-be-notified service type, to send a third wake-up signal and the first information.

In a possible design, the second wake-up signal belongs to a set of second wake-up signals, and the set of second wake-up signals includes at least two second wake-up signals, where each second wake-up signal in the set of second wake-up signals is associated with one service attribute in a set of service attribute information and is used to indicate the first information, the set of service attribute information includes one set of the following: a set of service identity information, a set of service type information, a set of quality of service QoS requirement information, or a set of service notification frequency information, and the set of service attribute information includes at least two pieces of service attribute information; and
the processing unit is configured to determine, based on the service attribute information, to send the first information and the second wake-up signal associated with the service attribute information.

In a possible design, the first information indicates service notification information.

In a possible design, that the first information indicates service notification information includes: the first information indicates the to-be-notified service type, where
the to-be-notified service type includes only the broadcast service or the multicast service;
the to-be-notified service type includes the broadcast service or the multicast service, and/or the unicast service;
the to-be-notified service type includes at least one of the following: the broadcast service, the multicast service, or the unicast service; or
the to-be-notified service type includes at least one of the following: the broadcast service, at least one multicast service in a set of multicast services, or the unicast service, where each service in the set of multicast services is associated with one service attribute in the set of service attribute information.

According to a fifth aspect, an embodiment of this application provides a communication apparatus, including a processor, where the processor is coupled to a memory, the memory is configured to store instructions, and when the instructions are run by the processor, the communication apparatus is enabled to perform the method according to any one of the first aspect and the possible designs.

According to a sixth aspect, an embodiment of this application provides a communication apparatus, including a processor, where the processor is coupled to a memory, the memory is configured to store instructions, and when the instructions are run by the processor, the communication apparatus is enabled to perform the method according to any one of the second aspect and the possible designs.

According to a seventh aspect, an embodiment of this application provides a computer-readable storage medium, configured to store instructions. When the instructions are run by a computer, the computer is enabled to perform the method according to any one of the first aspect and the possible designs.

According to an eighth aspect, an embodiment of this application provides a computer-readable storage medium, configured to store instructions. When the instructions are run by a computer, the computer is enabled to perform the method according to any one of the second aspect and the possible designs.

According to a ninth aspect, an embodiment of this application provides a circuit system, including a processing circuit and an interface circuit. The processing circuit and the interface circuit are configured to implement the method according to any one of the first aspect, the possible designs of the first aspect, the second aspect, or the possible designs of the second aspect.

According to a tenth aspect, an embodiment of this application further provides a computer program. The computer program is used to implement the method according to any one of the first aspect, the possible designs of the first aspect, the second aspect, or the possible designs of the second aspect.

According to an eleventh aspect, an embodiment of this application further provides a communication system, including the communication apparatus according to any one of the third aspect or the possible designs thereof or the communication apparatus according to the fifth aspect, and further including the communication apparatus according to any one of the fourth aspect or the possible designs thereof or the communication apparatus according to the sixth aspect.

### BRIEF DESCRIPTION OF DRAWINGS

FIG. 1 is a schematic diagram of a communication system according to an embodiment of this application;
FIG. 2 is a schematic block diagram of a communication apparatus according to an embodiment of this application;
FIG. 3 is a schematic block diagram of another communication apparatus according to an embodiment of this application;
FIG. 4 is a schematic block diagram of a circuit system according to an embodiment of this application;
FIG. 5 is a schematic flowchart of an information receiving and sending method according to an embodiment of this application;
FIG. 6 is a schematic diagram of detecting a wake-up signal and service notification information according to an embodiment of this application;
FIG. 7 is a schematic flowchart of another information receiving and sending method according to an embodiment of this application;
FIG. 8 is another schematic diagram of detecting a wake-up signal and service notification information according to an embodiment of this application;
FIG. 9 is a schematic flowchart of still another information receiving and sending method according to an embodiment of this application; and
FIG. 10 is still another schematic diagram of detecting a wake-up signal and service notification information according to an embodiment of this application.

### DESCRIPTION OF EMBODIMENTS

The following clearly describes the technical solutions in embodiments of this application with reference to the accompanying drawings in embodiments of this application.

In the specification, claims, and accompanying drawings of this application, the terms "including", "having", and any variation thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

In the specification, claims, and the accompanying drawings of this application, terms such as "first" and "second" are only intended to distinguish between different objects but do not describe a particular order. Sequence numbers of the processes do not mean execution sequences in various embodiments of this application. The execution sequences of the processes should be determined based on functions and internal logic of the processes. Numbers or sequence numbers in the processes are merely for differentiation for ease of description, and should not constitute any limitation on an implementation process of embodiments of this application.

In this application, "at least one (item)" means one or more, "a plurality of" means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. The character "/" usually indicates an "or" relationship between the associated objects. "At least one of the following items (pieces)" or a similar expression thereof means any combination of these items. For example, at least one of a, b, and c may represent: a, b, c, "a and b", "a and c", "b and c", or "a, b, and c".

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. A person skilled in the art may explicitly and implicitly understand that the embodiments described in this specification may be implemented independently, or may be properly combined with another embodiment, and explanations or descriptions of terms in the embodiments may be mutually referenced or explained in the embodiments. This is not limited.

A method and an apparatus that are provided in embodiments of this application may be applied to various communication systems, for example, a 4th generation (4th generation, 4G) communication system, a 4.5G communication system, a 5G communication system, a system in which a plurality of communication systems are integrated, or a future evolved communication system (for example, a 6G communication system). For example, the communication system may be a long term evolution (long term evolution, LTE) system, a new radio (new radio, NR) system, a wireless fidelity (wireless fidelity, Wi-Fi) system, a wireless self-organizing system, a device-to-device direct communication system, a communication system related to the 3rd Generation Partnership Project (3rd generation partnership project, 3GPP), and another communication system.

Before the method in this application is introduced, terms related to embodiments of this application are first introduced.

### 1: Service state

The service state in embodiments of this application may include the following types:
1. Unicast service state: The service state may specifically mean that the terminal device supports only a unicast service, or the terminal device is interested in only the unicast service or receives only the unicast service. That is, the service state may mean that the terminal device has no MBS capability, is not interested in an MBS, or does not receive the MBS.
2. Multicast service state: The service state may specifically mean that the terminal device supports a multicast service, or the terminal device is interested in the multicast service or is expecting the multicast service.
3. Broadcast service state: The service state may specifically mean that the terminal device supports a broadcast service, or the terminal device is interested in the broadcast service or is expecting the broadcast service.

### 2: Paging (paging)

The terminal device wakes up from a sleep state at a paging occasion (paging occasion, PO) in each paging cycle, detects whether there is a paging message, and performs service processing and the like based on a received paging message. Specifically, the terminal device may first detect downlink control information (DCI, downlink control information). The DCI indicates information such as a radio resource carrying the paging message and a used modulation and coding scheme. Then, the terminal device receives the paging message based on the detected DCI, and determines, based on content in the paging message, whether the paging message is related to the terminal device, for example, whether the paging message includes identification information of the terminal device, or whether the paging message includes identification information of a service in which the terminal device is interested. If determining that the paging message is related to the terminal device, the terminal device subsequently performs service processing based on the paging message.

### 3: Wake-up signal (wake-up signal, WUS)

The wake-up signal in embodiments of this application is designed to save power of the terminal device. The wake-up signal may also be referred to as a power saving signal or a WUS. To further save power, the terminal device may first detect a wake-up signal before detecting the DCI at the paging occasion. If detecting the wake-up signal, the terminal device further detects the DCI and the paging message. If not detecting wake-up information, the terminal device does not detect the DCI, continues to sleep in the paging cycle, detects the wake-up signal before detecting the DCI at a PO in a next paging cycle, and performs a corresponding action based on whether the wake-up signal is detected.

Compared with directly detecting the DCI or directly detecting the paging message, power consumption overheads are lower when the UE first detects the wake-up signal. The wake-up signal in embodiments of this application may be applied to power saving in a process of receiving the paging message, may be applied to power saving in a process of receiving a system broadcast message, or may be applied to power saving in a process of receiving a multicast control channel (Multicast Control Channel, MCCH), and the like. This is not limited in embodiments of this application.

The communication system and the communication apparatus provided in embodiments of this application are described below.

It should be understood that in the following described embodiments, only an example in which execution bodies are a network device and a terminal device is used. The network device may alternatively be replaced with a chip disposed in the network device, and the terminal device may alternatively be replaced with a chip disposed in the terminal device.

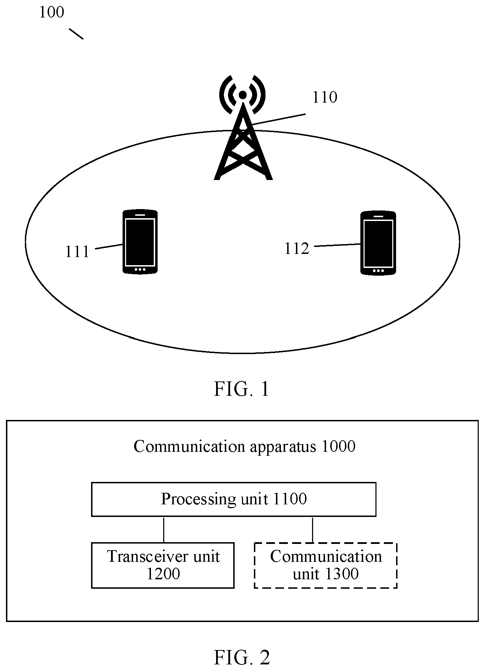

FIG. 1 shows a communication system according to an embodiment of this application. As shown in FIG. 1, the communication system 100 includes one or more network devices (only one network device 110 is shown in FIG. 1), and one or more terminal devices communicating with the one or more network devices. A terminal device 111 and a terminal device 112 shown in FIG. 1 communicate with the network device 110. It may be understood that the network device and the terminal device may also be referred to as communication devices. In the communication system, the network device 110 may send a paging message to the terminal device, and the terminal device may receive the paging message to determine whether there is a service related to the terminal device.

The terminal device in embodiments of this application may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

The network device in embodiments of this application may be a device configured to communicate with the terminal device. For example, the network device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, or an access node in a Wi-Fi system. For another example, the network device may alternatively be a module or a unit that completes some functions of the base station. For example, the network device may be a central unit (central unit, CU) or a distributed unit (distributed unit, DU). For still another example, the network device may alternatively be a radio controller, relay station, access point, vehicle-mounted device, or wearable device in a cloud radio access network (cloud radio access network, CRAN) scenario, or an access network device in another future evolved communication system. A specific technology and a specific device form that are used by the network device are not limited in this application.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of the execution body of the method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain, and/or carry instructions and/or data.

FIG. 2 is a schematic block diagram of a communication apparatus 1000 according to an embodiment of this application. As shown in FIG. 2, the communication apparatus 1000 may include a transceiver unit 1200 and a processing unit 1100.

The communication apparatus 1000 may be used as the network device 110 or an apparatus used in the network device 110. Alternatively, the communication apparatus 1000 may be used as the terminal device 111 or a terminal device 112, or an apparatus used in the terminal device 111 or the terminal device 112.

The processing unit 1100 may process a received signal or received information, or process a signal or information before a signal or information is sent. For example, when the processing unit 1100 belongs to the network device 110, the processing unit 1100 may perform baseband processing on a signal or information received by the transceiver unit 1200. Alternatively, the information on which baseband processing has been performed is further processed. For example, when the information received by the transceiver unit 1200 is a radio resource control (Radio Resource Control, RRC) connection request message from the terminal device, the processing unit 1100 of the network device 110 may perform access control, for example, determine, based on information such as system load and/or a priority of the terminal device, to allow access of the terminal device. For another example, when the processing unit 1100 belongs to the terminal device 111 or the terminal device 112, the processing unit 1100 may perform baseband processing on a signal or information received by the transceiver unit 1200. For example, after the transceiver unit 1200 receives a wake-up signal, the processing unit 1100 determines to further detect DCI corresponding to the wake-up signal, and after the transceiver unit 1200 receives a paging message, determines whether the paging message is related to the processing unit 1100.

The transceiver unit 1200 may receive and/or send a signal. For example, when the transceiver unit 1200 belongs to the network device 110, the transceiver unit 1200 may send a signal or information to the terminal device 111 or the terminal device 112. The signal or information may include a WUS, DCI, a paging message, a system broadcast message, an MCCH, downlink data, and the like. Correspondingly, when the transceiver unit 1200 belongs to the terminal device 111 or the terminal device 112, the transceiver unit 1200 may receive the foregoing signal or information from the network device 110. For another example, when the transceiver unit 1200 belongs to the network device 110, the transceiver unit 1200 may receive a signal or information of the terminal device 111 or the terminal device 112. The signal or information may include a measurement report, uplink data, an uplink reference signal, receiving state information of downlink data, and the like. Correspondingly, when the transceiver unit 1200 belongs to the terminal device 111 or the terminal device 112, the transceiver unit 1200 may send the foregoing signal or information to the network device 110.

The communication apparatus 1000 may further include a communication unit 1300. Receiving and/or sending of a signal or information may be completed between the communication unit 1300 and another network device. For example, when the communication unit 1300 belongs to the network device 110, the communication unit 1300 may communicate with the another network device (not shown in FIG. 1). For example, the network device 110 is a base station, and the another network device is also a base station. In this case, the communication unit 1300 may communicate (receive and/or send a signal or information) with the another base station. For another example, the network device 110 is a base station, and the another network device is a core network. In this case, the communication unit 1300 may communicate (receive and/or send a signal or information) with the core network.

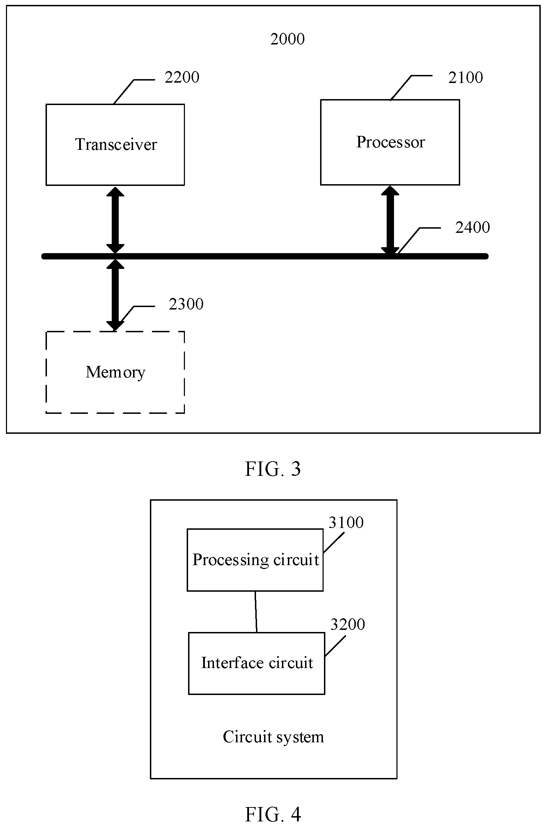

FIG. 3 is a schematic block diagram of another communication apparatus 2000 according to an embodiment of this application. As shown in FIG. 3, the communication apparatus 2000 may include one or more processors 2100 (only one processor is shown in FIG. 3), and may further include a transceiver 2200.

The communication apparatus 2000 may be used as the network device 110 or an apparatus used in the network device 110. Alternatively, the communication apparatus 2000 may be used as the terminal device 111 or a terminal device 112, or an apparatus used in the terminal device 111 or the terminal device 112.

Specifically, a function of the processing unit 1100 in the communication apparatus 1000 may be implemented by the one or more processors 2100. A function of the transceiver unit 1200 in the communication apparatus 1000 may be implemented by the transceiver 2200.

In various implementations of the communication apparatus 2000 shown in FIG. 3, the transceiver may include a receiver and a transmitter, the receiver is configured to perform a receiving function (or operation), and the transmitter is configured to perform a transmitting function (or operation). The transceiver is configured to communicate with another device/apparatus through a transmission medium.

The communication apparatus 2000 may further include one or more memories 2300, configured to store program instructions and/or data. The memory 2300 is coupled to the processor 2100. The coupling in this embodiment of this application may be an indirect coupling or a communication connection between apparatuses or units in an electrical form, a mechanical form, or another form, and is used for information exchange between the apparatuses or the units. The processor 2100 may cooperate with the memory 2300. The processor 2100 may execute the program instructions stored in the memory 2300. Optionally, at least one of the one or more memories may be included in the processor. A specific connection medium between the processor 2100, the transceiver 2200, and the memory 2300 is not limited in this embodiment of this application. In an example shown in FIG. 3, the processor 2100, the transceiver 2200, and the memory 2300 are connected through a bus 2400. The bus is represented by a bold line. A connection manner between other components is merely an example for description, and is not limited thereto. The bus may be classified into an address bus, a data bus, a control bus, or the like. For ease of representation, only one bold line is used to represent the bus in FIG. 3, but this does not indicate that there is only one bus or only one type of bus.

It may be understood that when the communication apparatus shown in FIG. 3 is a network device, the network device may further have more components and the like than those shown in FIG. 3. It may also be understood that when the communication apparatus shown in FIG. 3 is a terminal device, the terminal device may further have more components and the like than those shown in FIG. 3. This is not limited in embodiments of this application.

FIG. 4 is a schematic block diagram of a circuit system 3000 according to an embodiment of this application. As shown in FIG. 4, a network device may include a processing circuit 3100 and an interface circuit 3200.

The circuit system 3000 may be used as the network device 110 or an apparatus used in the network device 110. Alternatively, the circuit system 3000 may be used as the terminal device 111 or the terminal device 112, or an apparatus used in the terminal device 111 or the terminal device 112. In this case, the foregoing processing unit 1100 may be implemented by using the processing circuit 3100, and the transceiver unit 1200 may be implemented by using the interface circuit 3200. The processing circuit 3100 may be a chip, a logic circuit, an integrated circuit, a system on chip (system on chip, SoC) chip, or the like. The interface circuit 3200 may be a communication interface, an input/output interface, or the like.

In embodiments of this application, the processor 2100 or the processing circuit 3100 may be a general-purpose processor, a digital signal processor, an application-specific integrated circuit, a field programmable gate array or another programmable logic device, a discrete gate or transistor logic device, a discrete hardware component, or the like, and may implement or execute the methods, steps, and logical block diagrams provided in embodiments of this application. The general-purpose processor may be a microprocessor, any conventional processor, or the like. The steps of the methods provided with reference to embodiments of this application may be directly executed and accomplished by a hardware processor, or may be executed and accomplished by using a combination of hardware and software modules in the processor.

The following describes the method provided in embodiments of this application with reference to the foregoing communication apparatus and system.

It should be understood that in the following described method embodiments, only an example in which execution bodies are a network device and/or a terminal device is used. The network device may alternatively be replaced with a chip disposed in the network device, and the terminal device may alternatively be replaced with a chip disposed in the terminal device.

The network device usually notifies, by using a paging mechanism, the terminal device that a service arrives. Correspondingly, the terminal device determines, by receiving a paging message, whether the paging message includes information related to the terminal device, to subsequently perform service processing. To save power, in idle or inactive state, the terminal device cyclically wakes up to listen to a paging message from the network device, and is in dormant state (for example, turns off a receiver) in other time. Specifically, the terminal device may wake up at a paging occasion (PO) in each paging cycle to detect (or receive) DCI sent by the network device, then receive a paging message based on the detected (or received) DCI, and determine, based on content in the paging message, whether the paging message is related to the terminal device. The terminal device may further read system information according to an indication of an SMS message (short message) in the DCI (where for example, if the SMS message indicates that the system information changes, the terminal device reads the system information according to the short message). To further save power, the terminal device first detects a wake-up signal before waking up to listen to DCI at each PO, and receives the DCI and a paging message only after detecting the wake-up signal. If not detecting the wake-up signal, the terminal device does not receive the DCI and the paging message in a current paging cycle.

Because the paging message is sent to a group of terminal devices (where for example, the paging message may carry identification information of a plurality of terminal devices, or carry service identification information for the group of terminal devices), a paged terminal device knows whether the paging message is related to the terminal device only after detecting and receiving the paging message. For example, a service state of a terminal device 1 is a unicast service state, but the paging message is for an MBS. In this case, the terminal device 1 knows that the paging is irrelevant to the terminal device 1 only after receiving the paging message. In this case, the terminal device detects DCI (or a wake-up signal and the DCI), and receives a paging message irrelevant to the terminal device. This wastes power of the terminal device, and affects battery life.

In view of this, an embodiment of this application provides an information receiving and sending method, to reduce power consumption caused by detecting, by a terminal device, a paging message irrelevant to the terminal device, and facilitate battery life.

An embodiment of this application provides an information receiving and sending method. This is described by using an example in which execution bodies are the terminal device 111 and the network device 110.

In the information receiving and sending method provided in this embodiment of this application, the terminal device 111 determines, based on a service state, whether to detect a wake-up signal. For example, when the service state is a unicast service state, the terminal device 111 detects the wake-up signal. When the service state includes a multicast service state and/or a broadcast service state, the terminal device 111 does not detect the wake-up signal. Alternatively, the wake-up signal is refined, and the terminal device detects different wake-up signals in different service states. Therefore, power consumption caused by waking up of the terminal device to detect and receive service notification information irrelevant to the terminal device can be reduced.

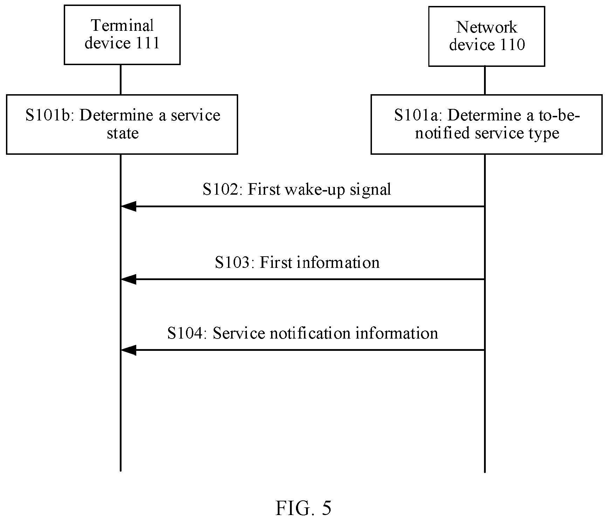

FIG. 5 is a schematic flowchart of an information receiving and sending method according to an embodiment of this application. As shown in FIG. 5, the method includes the following steps.

S101a: The network device 110 determines a to-be-notified service type.

The to-be-notified service type is to notify a specific service to be initiated, a specific service to be received by a terminal device, or a service that is of the terminal and for which data needs to be transmitted.

For example, the to-be-notified service type may include at least one of a unicast service, a multicast service, or a broadcast service. Alternatively, the to-be-notified service type may include at least one of the unicast service or an MBS (where to be specific, the multicast service and the broadcast service are not distinguished).

A manner in which the network device obtains the to-be-notified service type may include first receiving one piece of service notification information from a core network. The service notification information may be paging or other information of the core network. This is not limited in this embodiment of this application. For example, when the core network has a notification of a related MBS service, for example, a start of an MBS or MBS data needing to be transmitted, the core network triggers the notification. Correspondingly, the service notification information may indicate information related to the multicast service and/or the broadcast service, for example, one or more of a service identity (service identity, Service ID), a TMGI, an MBS indicator, a service type (for example, the multicast service or the broadcast service), or identification information (for example, UE ID) of a terminal device receiving the service or of a terminal device interested in the service. For another example, the network device may request content of the service notification information from the core network, and receive one piece of service notification information from the core network. Optionally, the service notification information may further indicate capability information whether the terminal device supports a wake-up signal. The capability information is reported by the terminal device to the core network in advance. Specifically, the capability information may include whether the terminal device supports the wake-up signal, a time gap between the wake-up signal and a corresponding paging occasion, and the like. It may be understood that the time gap between the wake-up signal and the corresponding paging occasion indicates a minimum time gap between the wake-up signal and the PO, and the minimum time gap may be related to a processing capability of the terminal device.

In another implementation, the to-be-notified service type may be locally stored in the network device. For example, the information related to the multicast service and/or the broadcast service, for example, one or more of the service identity (Service ID), the TMGI, the MBS indicator, or the service types (for example, the multicast service or the broadcast service), is locally stored in the network device. The manner of obtaining the content of the service notification information is not limited in this embodiment of this application.

The network device determines, based on the to-be-notified service type, whether to perform an action performed by the network device in S102.

In an implementation, when the to-be-notified service type includes the unicast service, the network device determines to perform the action performed by the network device in S102. For example, the to-be-notified service type is the unicast service, the to-be-notified service type includes the unicast service and the multicast service, or the to-be-notified service type includes the unicast service, the multicast service, and the broadcast service. In this case, the network device determines to perform the action performed by the network device in S102. Further, if the service notification information from the core network indicates capability information that the terminal device supports the wake-up signal, before determining to perform the action performed by the network device in S102, the network device further needs to determine that the terminal device supports receiving of the wake-up signal. If determining that a terminal device corresponding to a to-be-paged unicast service does not support receiving of the wake-up signal, the network device does not perform S102.

In another implementation, when the to-be-notified service type does not include the unicast service, the network device determines to perform an action performed by the network device in S103 instead of performing S102. Alternatively, the network device determines that the terminal device corresponding to the to-be-paged unicast service does not support receiving of the wake-up signal, and does not perform S102 either.

In step S101a, the action of the network device 110 may be performed by the processing unit 1100, the processor 2100, or the processing circuit 3100 in the foregoing communication apparatus (used as the network device).

S101b: The terminal device 111 determines the service state.

Specifically, the service state of the terminal device 111 may be a unicast service state, the service state of the terminal device 111 may include a multicast service state, the service state of the terminal device 111 may include a broadcast service state, or the service state of the terminal device 111 may include the multicast service state and the broadcast service state. For an explanation of the service state, refer to the foregoing descriptions. Repeated descriptions are not provided herein again.

When the service state of the terminal device 111 is the unicast service state, the terminal device performs the action of the terminal device in S102, for example, detects a first wake-up signal from the network device. When the service state of the terminal device 111 includes the multicast service state and/or the broadcast service state, the terminal device skips S102 and performs the action of the terminal device in S103.

The network device usually pages one group of terminal devices at the same time. The group of terminal devices may include one or more terminal devices. For example, the group of terminal devices may include the terminal device 111 and the terminal device 112. The network device may group the terminal devices into different groups based on identification information of the terminal devices, for example, temporary mobile subscriber identities (temporary mobile subscriber identities, TMSIs). Terminal devices in a same group wake up at a same paging occasion (PO) to detect or receive a paging message. This application does not describe in detail which terminal devices are grouped into a group.

In the group of terminal devices, service states of different terminal devices may be different. For example, the service state of the terminal device 111 is the unicast service state, and the service state of the terminal device 112 may include the multicast service state and/or the broadcast service state.

If the service state of the terminal device 111 includes the multicast service state and/or the broadcast service state, even if the network device 110 sends the first wake-up signal (where for example, the network device determines that service notification information for the group of terminal devices includes the unicast service), the terminal device 111 does not perform S102 either, to be specific, does not detect the first wake-up signal, or ignores the first wake-up signal.

If the service state of the terminal device 111 is the unicast service state, the terminal device 111 detects the first wake-up signal, regardless of whether the network device sends the first wake-up signal.

In step S101b, the action of the terminal device 111 may be performed by the processing unit 1100, the processor 2100, or the processing circuit 3100 in the foregoing communication apparatus (used as the terminal device).

S102: The network device 110 sends the first wake-up signal to the terminal device 111.

As described above, when the network device determines that the to-be-notified service type includes the unicast service, the network device may send the first wake-up signal. Details are not described herein. Alternatively, the network device sends the first wake-up signal based on the to-be-notified service type including the unicast service. In this case, step S101a is optional. To be specific, the network device may not explicitly determine the to-be-notified service type.

Correspondingly, when the service state of the terminal device 111 is the unicast service state, the terminal device 111 determines to detect the first wake-up signal. Alternatively, the terminal device determines to detect the first wake-up signal based on the service state being the unicast service state. In this case, step 101b is optional. To be specific, the terminal device may not explicitly determine that the service state is the unicast service state.

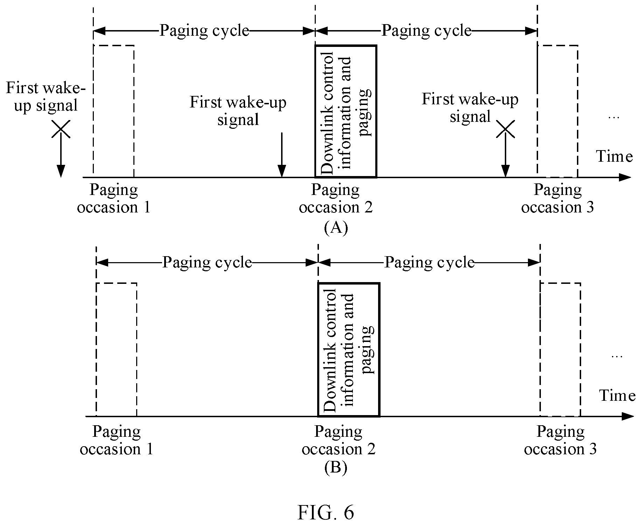

The first wake-up signal indicates the terminal device to detect first information. When the terminal device detects the first wake-up signal, it indicates that the terminal device needs to further receive the first information. When the terminal device attempts to detect the first wake-up signal but does not detect (receive) the first wake-up signal, the terminal device no longer receives the first information, but detects the first wake-up signal based on the service state at a paging occasion corresponding to a next paging cycle or an occasion corresponding to the first wake-up signal. FIG. 6 shows an example in which the terminal device detects the first wake-up signal and the service notification information. In FIG. 6(A), an example in which the service state of the terminal device is the unicast service state, the service notification information is paging, and the first information is downlink control information is used for description. As shown in FIG. 6(A), before a paging occasion in each paging cycle, the terminal device first detects the first wake-up signal corresponding to the paging occasion. Specifically, before a paging occasion 1, if the terminal device wakes up to attempt to detect the first wake-up signal, but does not detect the first wake-up signal, the terminal device no longer detects the downlink control information and the paging at the paging occasion 1, but remains sleep until a next paging cycle (a paging occasion 2). Before the paging occasion 2, the terminal device wakes up again to detect the first wake-up signal. If detecting the first wake-up signal, the terminal device further receives the downlink control information and the paging at the paging occasion 2, and performs subsequent processing based on content in the paging, for example, receiving the unicast service or receiving the multicast service and/or the broadcast service. Before a paging occasion 3, if the terminal device attempts to detect the first wake-up signal again, but does not detect the first wake-up signal, the terminal device no longer detects the downlink control information and the paging at the paging occasion 3, but remains sleep until a next paging cycle. Details are not described again.

In FIG. 6(B), an example in which the service state of the terminal device includes the multicast service state and/or the broadcast service state, the service notification information is paging, and the first information is downlink control information is used for description. As shown in FIG. 6(B), the terminal device detects or receives the downlink control information and the paging at a paging occasion in each paging cycle. Specifically, at a paging occasion 1, if the terminal device does not receive the downlink control information and the paging at the paging occasion 1, the terminal device remains sleep until a next paging cycle (a paging occasion 2). At the paging occasion 2, the terminal device wakes up again to detect or receive the downlink control information and the paging. If receiving the paging, the terminal device performs subsequent processing based on content in the paging, for example, receiving the unicast service or receiving the multicast service and/or the broadcast service. Before a paging occasion 3, the terminal device attempts to detect the downlink control information and the paging again. Details are not described again.

In an implementation, the network device first sends configuration information of the first wake-up signal to the terminal device. Correspondingly, the terminal device receives the configuration information of the first wake-up signal. Specifically, the configuration information of the first wake-up signal may be carried in system information or information sent by another network device through broadcast, or may be carried in unicast information, for example, a dedicated message such as a radio resource control release (RRC Release) message. This is not limited in this embodiment of this application. The configuration information of the first wake-up signal may include: a frequency domain resource location of the WUS (Frequency location of WUS), a time domain resource location of the WUS, configured maximum WUS duration (Maximum WUS duration), a minimum time gap from an end of the configured maximum WUS duration to the 1^{st} associated PO (Minimum time gap from the end of the configured maximum WUS duration to the first associated PO), and the like. In step S102, the action of the network device 110 may be performed by the transceiver unit 1200, the transceiver 2200, or the interface circuit 3200 in the foregoing communication apparatus (used as the network device), and the action of the terminal device 111 may be performed by the transceiver unit 1200, the transceiver 2200, or the interface circuit 3200 in the foregoing communication apparatus (used as the terminal device).

S103: The network device 110 sends the first information to the terminal device.

Correspondingly, the terminal device 111 detects or receives the first information.

The first information may be downlink control information (downlink control information, DCI). When the service notification information is paging, the first information may be scrambled by using a P-RNTI. When the service notification information is system information, the first information may be scrambled by using a system information-radio network temporary identity (system information-radio network temporary identity, SI-RNTI) or the paging-radio network temporary identity (paging-radio network temporary identity, P-RNTI). When the service notification information is an MCCH information, the first information may be scrambled by using a multimedia broadcast multicast service-radio network temporary identity (Multimedia Broadcast Multicast Service-RNTI, M-RNTI) or the P-RNTI.

The first information usually includes a radio resource (for example, a physical resource block) used for transmission of the service notification information, and may further include information such as a modulation and coding scheme. When the service state of the terminal device 111 is the unicast service state, the terminal device receives the first information based on the detected first wake-up signal. That is, the terminal device receives the first information in response to the detected first wake-up signal. Further, the terminal device receives the service notification information based on the received first information (an action of the terminal device in S104).

When the service state of the terminal device 111 includes the multicast service state and/or the broadcast service state, the terminal device detects or receives the first information. To be specific, at the paging occasion, the terminal device directly detects whether the first information exists. If detecting the first information (or receiving the first information), the terminal device further receives the service notification information based on the first information (the action of the terminal device in S104).

In step S103, the action of the network device 110 may be performed by the transceiver unit 1200, the transceiver 2200, or the interface circuit 3200 in the foregoing communication apparatus (used as the network device), and the action of the terminal device 111 may be performed by the transceiver unit 1200, the transceiver 2200, or the interface circuit 3200 in the foregoing communication apparatus (used as the terminal device).

S104: The network device 110 sends the service notification information to the terminal device.

Correspondingly, the terminal device 111 receives the service notification information.

The service notification information may include at least one of the paging, the system information, or information carried on the MCCH.

Content in the service notification information may include at least one of identification information of a to-be-notified terminal device and identification information of a to-be-notified service. When the service notification information is the paging, the identification information of the terminal device may be the TMSI, and the identification information of the to-be-notified service may be the TMGI. The service notification information may alternatively be the system information and/or the MCCH information. In this case, the identification information of the to-be-notified service may be the TMGI.

The content of the service notification information may include the to-be-notified service type.

The service notification information may be transmitted on a physical downlink shared channel (physical downlink shared channel, PDSCH). For example, when the service notification information is the paging or the system information, the service notification information is transmitted on the PDSCH.

Further, the terminal device performs a subsequent operation based on the content in the service notification information. For example, the service notification information is the paging. When content in the paging includes the identification information of the terminal device, the terminal device determines that the paging is related to the terminal device, and responds to the paging. If the terminal device is in idle state or inactive state, the terminal device initiates an RRC connection request process. Alternatively, when the content in the paging includes the identification information of the to-be-notified service, the terminal device determines, based on the identification information of the to-be-notified service, that the paging is related to the terminal device, that is, that the identification information of the to-be-notified service is a service in which the terminal device is interested, and responds to the paging. For example, if the terminal device is in idle state or inactive state, the terminal device initiates the RRC connection request process. The service notification information may alternatively indicate the terminal device to read the system information and/or the MCCH information. The system information and/or the MCCH information may include the identification information of the to-be-notified service. In this case, similar to the foregoing solution, the terminal device determines, based on the identification information of the to-be-notified service, that the paging is related to the terminal device, and responds to the notification information. For example, if the terminal device is in idle state or inactive state, the terminal device initiates the RRC connection request process, obtains a service configuration by using broadcast information, or the like.

In step S104, the action of the network device 110 may be performed by the transceiver unit 1200, the transceiver 2200, or the interface circuit 3200 in the foregoing communication apparatus (used as the network device), and the action of the terminal device 111 may be performed by the transceiver unit 1200, the transceiver 2200, or the interface circuit 3200 in the foregoing communication apparatus (used as the terminal device).

This step is optional.

In this embodiment of this application, the wake-up signal is used, and the wake-up signal is related only to the unicast service, to reduce unnecessary power consumption of the terminal device. For example, the terminal device detects the first wake-up signal only when the service state is the unicast service state. The terminal device no longer detects the first wake-up signal when the service state includes the multicast service state and/or the broadcast service state. Therefore, when the to-be-notified service type in the service notification information includes only the multicast service state and/or the broadcast service state, the network device does not need to send the first wake-up signal. In addition, because the terminal device cannot detect the first wake-up signal when the service state is the unicast service state, the terminal device does not need to further receive the first information and the service notification information either. Therefore, this is beneficial to saving power of the network device and the terminal device. In a system, when a proportion of terminal devices whose service states are the unicast service state is higher, or when the to-be-notified service type in the service notification information frequently includes only the multicast service state and/or the broadcast service state, a better power saving effect may be achieved.

In another embodiment of this application, different wake-up signals are designed for different service states. For example, when a service state of a terminal device is a unicast service state, a first wake-up signal is detected. When the service state of the terminal device includes a multicast service state and/or a broadcast service state, a second wake-up signal is detected. Further, the first wake-up signal may be further detected. In addition to the advantages of the foregoing embodiment, power consumption of the terminal device whose service state is the multicast service state and/or the broadcast service state may be further reduced.

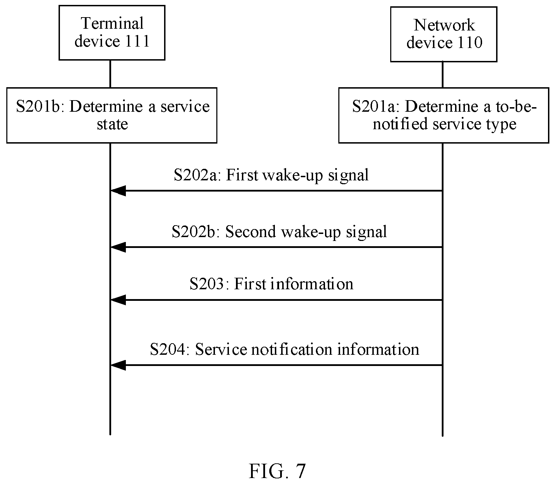

As shown in FIG. 7, a method provided in an embodiment of this application includes the following steps.

S201a: The network device 110 determines a to-be-notified service type. Specifically, for this step, refer to S101a.

In addition, in step S201a, when the to-be-notified service type includes a unicast service, the network device determines to perform an action of the network device in S202a. For example, when the to-be-notified service type includes the unicast service, or when the to-be-notified service type includes the unicast service and a multicast service, the network device determines to perform the action of the network device in S202a.

When the to-be-notified service type includes the multicast service and/or a broadcast service, the network device determines to perform an action of the network device in S202b. For example, when the to-be-notified service type includes the multicast service and/or the broadcast service, or when the to-be-notified service type includes the multicast service and/or the broadcast service and the unicast service, the network device determines to perform the action of the network device in S202b.

It may be understood that when the to-be-notified service type includes the unicast service and the multicast service and/or the broadcast service, the network device determines to perform the action of the network device in S202a and the action of the network device in S202b.

S201b: The terminal device 111 determines a service state.

Specifically, for this step, refer to S101b.

A difference between step S201b and step S101b lies in that when the service state of the terminal device 111 is the unicast service state, the terminal device performs an action of the terminal device in step S202a to detect a first wake-up signal from the network device. When the service state of the terminal device 111 includes the multicast service state and/or the broadcast service state, the terminal device performs an action of the terminal device in S202b. Further, when the service state of the terminal device 111 includes the multicast service state and/or the broadcast service state, the terminal device may perform the action of the terminal device in S202a.

S202a: The network device 110 sends the first wake-up signal to the terminal device 111.

In an implementation, the actions of the network device in S201a and S202a may be replaced with that the network device sends the first wake-up signal based on the to-be-notified service type including a unicast service. In this case, it may be understood that step S201a is optional. To be specific, the network device may not explicitly determine the to-be-notified service type.

Correspondingly, when the service state of the terminal device 111 is the unicast service state, the terminal device 111 determines to detect the first wake-up signal.

In an implementation, the actions of the terminal device in S201b and S202a may be replaced with that the terminal device 111 detects the first wake-up signal based on the service state being the unicast service state. In this case, it may be understood that step S201b is optional.

Specifically, for this step, refer to S102.

S202b: The network device 110 sends a second wake-up signal to the terminal device 111.

In an implementation, the actions of the network device in S201a and S202b may be replaced with that the network device sends the second wake-up signal based on the to-be-notified service type including a multicast service and/or a broadcast service. In this case, it may be understood that step S201a is optional. To be specific, the network device may not explicitly determine the to-be-notified service type.

Correspondingly, when the service state of the terminal device 111 includes the multicast service state and/or the broadcast service state, the terminal device 111 determines to detect the second wake-up signal.

In an implementation, the actions of the terminal device in S201b and S202b may be replaced that the terminal device 111 detects the second wake-up signal based on the service state including the multicast service state and/or the broadcast service state. In this case, it may be understood that step S201b is optional.

Specifically, for this step, refer to S102.

The second wake-up signal indicates the terminal device to detect first information. When the terminal device detects the second wake-up signal, it indicates that the terminal device needs to further receive the first information. When the terminal device attempts to detect the second wake-up signal, but does not detect (receive) the second wake-up signal, the terminal device no longer receives the first information, but detects the second wake-up signal based on the service state at a paging occasion corresponding to a next paging cycle.

In this embodiment of this application, the first wake-up signal and the second wake-up signal may use different sequences, and/or may use different radio resources (time domain resources and/or frequency domain resources). Further, the first wake-up signal and the second wake-up signal may also have different cycles. For example, the cycle of the first wake-up signal is the same as the paging cycle, and the cycle of the second wake-up signal is N times the paging cycle, where N is greater than 1.

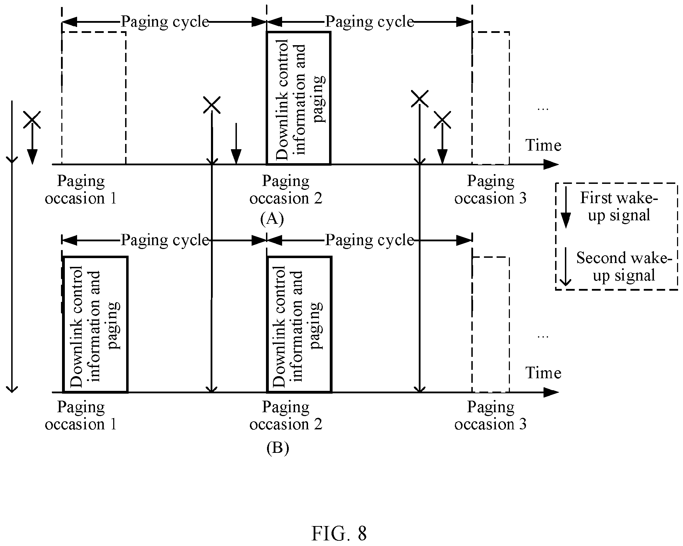

FIG. 8 shows an example in which the terminal device detects the first wake-up signal, the second wake-up signal, and service notification information. An example in which the service notification information is paging and the first information is downlink control information is used for description.

In FIG. 8(A), assuming that the service state of the terminal device is the unicast service state, refer to FIG. 6(A). Details are not described herein again.

In an implementation, assuming that the service state of the terminal device includes the multicast service state and/or the broadcast service state, the terminal device detects the second wake-up signal. In this case, this is similar to a process in which the terminal device detects the first wake-up signal. Details are not described again.

In another implementation, assuming that the service state of the terminal device includes the multicast service state and/or the broadcast service state, the terminal device detects the first wake-up signal and the second wake-up signal, as shown in FIG. 8(B). In this case, regardless of whether the first wake-up signal or the second wake-up signal is detected, the terminal device needs to receive the first information. Further, when detecting one of the first wake-up signal and the second wake-up signal, the terminal device may no longer detect the other wake-up signal, to further reduce power consumption of the terminal. As shown in FIG. 8(B), if detecting the second wake-up signal before a paging occasion 1, the terminal device receives downlink control information and paging at the paging occasion 1. If detecting the first wake-up signal before a paging occasion 2, the terminal device receives the downlink control information and the paging at the paging occasion 2. If the terminal device does not detect the first wake-up signal and the second wake-up signal before a paging occasion 3, the terminal device no longer receives the downlink control information and the paging at the paging occasion 3, and remains sleep until a next paging cycle (not shown in the figure).

In an implementation, the network device first sends configuration information of the first wake-up signal and second wake-up signal to the terminal device. Correspondingly, the terminal device receives the configuration information of the first wake-up signal and second wake-up signal. Specifically, the configuration information of the first wake-up signal and second wake-up signal may be carried in system information or information sent by another network device through broadcast, or may be carried in unicast information, for example, a dedicated message such as a radio resource control release (RRC Release) message. This is not limited in this embodiment of this application. The configuration information of the first wake-up signal may indicate a radio resource (one or more of a time domain resource, a frequency domain resource, a code domain resource, or a space domain resource) of the first wake-up signal. The configuration information may further indicate that the configuration information is associated with the first wake-up signal or that the service state is the unicast service state. Similarly, the configuration information of the second wake-up signal may indicate a radio resource (one or more of a time domain resource, a frequency domain resource, a code domain resource, or a space domain resource) of the second wake-up signal. The configuration information may further indicate that the configuration information is associated with the second wake-up signal or the service state is the broadcast service state and/or the multicast service state. Correspondingly, the terminal device determines a detected wake-up signal based on the service state and the configuration information of the first wake-up signal and/or the configuration information of the second wake-up signal.

S203: The network device 110 sends the first information to the terminal device.

Correspondingly, the terminal device 111 detects or receives the first information.

Specifically, for this step, refer to S103.

S204: The network device 110 sends the service notification information to the terminal device.

Correspondingly, the terminal device 111 receives the service notification information.

Specifically, for this step, refer to S104.

This step is optional.

In this embodiment of this application, the first wake-up signal corresponding to the unicast service and the second wake-up signal corresponding to the broadcast service and/or the multicast service are used, to reduce power consumption of the terminal device in the unicast service state. In addition, power consumption of the terminal device in the broadcast service state and/or the multicast service state can also be reduced. For example, when the service state of the terminal device is the unicast service state, the terminal device detects the first wake-up signal, and further receive the first information and the service notification information only after the first wake-up signal is detected. If the first wake-up signal is not detected, the terminal device does not need to receive the corresponding first information and service notification information, to save power. Similarly, when the service state includes the multicast service state and/or the broadcast service state, the terminal device detects the second wake-up signal (or the first wake-up signal and the second wake-up signal), and further receives the first information and the service notification information only after the second wake-up signal (or the first wake-up signal and the second wake-up signal) is detected. If the second wake-up signal is not detected (or the first wake-up signal and the second wake-up signal are not detected), the terminal device does not need to receive the corresponding first information and service notification information, to save power.

In another embodiment of this application, on the basis of the embodiment that is shown in FIG. 7 and in which the first wake-up signal and the second wake-up signal are included, a third wake-up signal is further used, to process a unicast service, a multicast service, and a broadcast service. For example, when a service state of a terminal device is a unicast service state, the first wake-up signal is detected. When the service state of the terminal device includes a multicast service state, the second wake-up signal is detected. Further, the first wake-up signal may be further detected. When the service state of the terminal device includes a broadcast service state, the third wake-up signal is detected. Further, the first wake-up signal and/or the second wake-up signal may be detected. In this embodiment of this application, power consumption of the terminal device in different service states can be reduced.

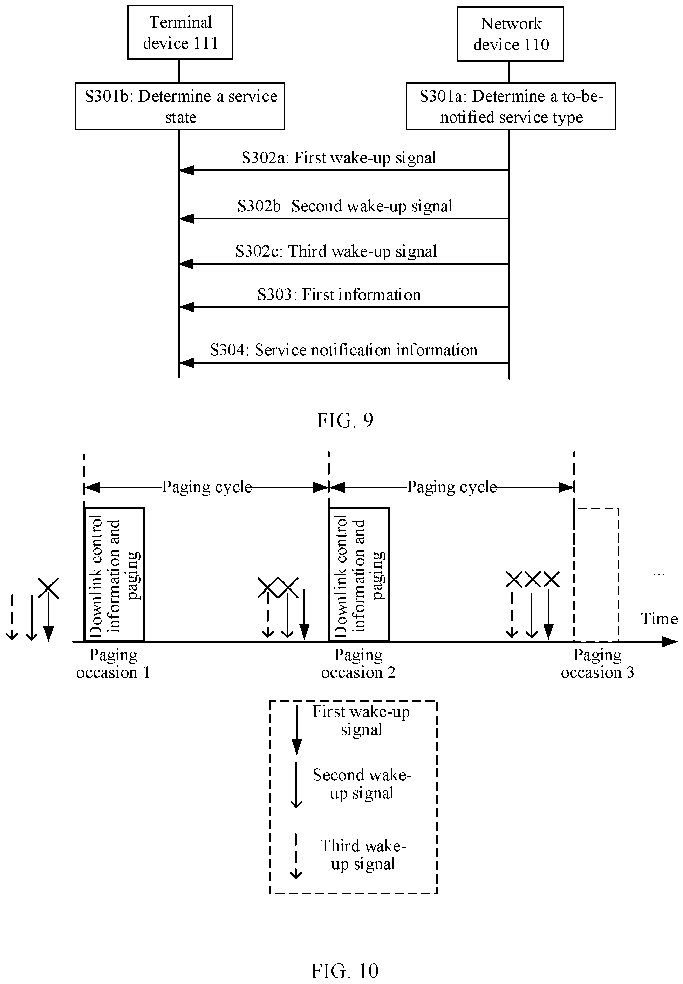

As shown in FIG. 9, a method provided in an embodiment of this application includes the following steps.

S301a: The network device 110 determines a to-be-notified service type. Specifically, for this step, refer to S101a or S201a.

In addition, in step S301a, when the to-be-notified service type includes a unicast service, the network device determines to perform an action of the network device in S302a. For example, when the to-be-notified service type includes the unicast service, or when the to-be-notified service type includes the unicast service and a multicast service, the network device determines to perform the action of the network device in S302a.

When the to-be-notified service type includes the multicast service, the network device determines to perform an action of the network device in S302b. For example, when the to-be-notified service type includes the multicast service, or when the to-be-notified service type includes the multicast service, a broadcast service, and the unicast service, the network device determines to perform the action of the network device in S302b.

When the to-be-notified service type includes the broadcast service, the network device determines to perform an action of the network device in S302c. For example, when the to-be-notified service type includes the broadcast service, or when the to-be-notified service type includes the broadcast service, the multicast service, and the unicast service, the network device determines to perform the action of the network device in S302c.

It may be understood that when the to-be-notified service type includes the unicast service, the multicast service, and the broadcast service, the network device determines to perform the action of the network device in S302a, the action of the network device in S302b, and the action of the network device in S302c.

S301b: The terminal device 111 determines a service state.

Specifically, for this step, refer to S101b or S201b.

A difference between step S301b and step S201b lies in that when the service state of the terminal device 111 is a unicast service state, the terminal device performs an action of the terminal device in step S302a to detect a first wake-up signal from the network device. When the service state of the terminal device 111 includes a multicast service state, the terminal device performs an action of the terminal device in S302b. Further, when the service state of the terminal device 111 includes the multicast service state and/or a broadcast service state, the terminal device may perform the action of the terminal device in S302a. When the service state of the terminal device 111 includes the broadcast service state, the terminal device performs an action of the terminal device in S302c. Further, when the service state of the terminal device 111 includes the broadcast service state, the terminal device may perform the action of the terminal device in S302a and/or the action of the terminal device in S302b.

S302a: The network device 110 sends the first wake-up signal to the terminal device 111.

Correspondingly, when the service state of the terminal device 111 is the unicast service state, the terminal device 111 determines to detect the first wake-up signal.

Specifically, for this step, refer to S102 or S202a.

S302b: The network device 110 sends a second wake-up signal to the terminal device 111.

Correspondingly, when the service state of the terminal device 111 includes the multicast service state, the terminal device 111 determines to detect the second wake-up signal.

Specifically, for this step, refer to S102 or S202b.

The second wake-up signal indicates the terminal device to detect first information. When the terminal device detects the second wake-up signal, it indicates that the terminal device needs to further receive the first information. When the terminal device attempts to detect the second wake-up signal, but does not detect (receive) the second wake-up signal, the terminal device no longer receives the first information, but detects the second wake-up signal based on the service state at a paging occasion corresponding to a next paging cycle.

S302c: The network device 110 sends a third wake-up signal to the terminal device 111.

Correspondingly, when the service state of the terminal device 111 includes the broadcast service state, the terminal device 111 determines to detect the third wake-up signal.

Specifically, for this step, refer to S202b.

In this embodiment of this application, the first wake-up signal, the second wake-up signal, and the third wake-up signal may use different sequences, and/or may use different radio resources (time domain resources and/or frequency domain resources). Further, the first wake-up signal and the second wake-up signal may also have different cycles. For example, the cycle of the first wake-up signal is the same as the paging cycle; the cycle of the second wake-up signal is M times the paging cycle, where M is greater than 1; and the cycle of the third wake-up signal is N times the paging cycle, where N is greater than 1.

With reference to FIG. 8 and FIG. 10, this embodiment of this application provides an example in which the terminal device detects the first wake-up signal, the second wake-up signal, the third wake-up signal, and service notification information. An example in which the service notification information is paging and the first information is downlink control information is used for description.

In an implementation, when the service state of the terminal device is the unicast service state, the terminal device detects the first wake-up signal, as shown in FIG. 8(A). Details are not described herein.

In an implementation, when the service state of the terminal device is the multicast service state, the terminal device detects the second wake-up signal. In this case, this is similar to a process in which the terminal device detects the first wake-up signal. Details are not described again.

In an implementation, when the service state of the terminal device is the multicast service state, the terminal device detects the first wake-up signal and the second wake-up signal, as shown in FIG. 8(B). Details are not described herein again.

In an implementation, when the service state of the terminal device is the broadcast service state, the terminal device detects the third wake-up signal. In this case, this is similar to a process in which the terminal device detects the first wake-up signal or the second wake-up signal. Details are not described again.

In an implementation, when the service state of the terminal device is the broadcast service state, the terminal device detects the first wake-up signal and the third wake-up signal. In this case, this is similar to a process in which the terminal device detects the first wake-up signal or the second wake-up signal. Details are not described herein again. In an implementation, when the service state of the terminal device is the broadcast service state, the terminal device detects the second wake-up signal and the third wake-up signal. In this case, this is similar to a process in which the terminal device detects the first wake-up signal or the second wake-up signal. Details are not described herein again. In an implementation, when the service state of the terminal device is the broadcast service state, the terminal device detects the first wake-up signal, the second wake-up signal, and the third wake-up signal, as shown in FIG. 10. In this case, when the terminal device detects any one of the first wake-up signal, the second wake-up signal, and the third wake-up signal, the terminal device needs to receive the first information. Further, when detecting any one of the first wake-up signal, the second wake-up signal, and the third wake-up signal, the terminal device may no longer detect the other two wake-up signals, to further reduce power consumption of the terminal. As shown in FIG. 10, if detecting the third wake-up signal before a paging occasion 1, the terminal device receives downlink control information and paging at the paging occasion 1. If detecting the first wake-up signal before a paging occasion 2, the terminal device receives the downlink control information and the paging at the paging occasion 2. If the terminal device does not detect the first wake-up signal, the second wake-up signal, and the third wake-up signal before a paging occasion 3, the terminal device no longer receives the downlink control information and the paging at the paging occasion 3, and remains sleep until a next paging cycle (not shown in the figure).

In an implementation, the network device first sends configuration information of the first wake-up signal, second wake-up signal, and third wake-up signal to the terminal device. Correspondingly, the terminal device receives the configuration information of the first wake-up signal, second wake-up signal, and third wake-up signal. Specifically, the configuration information of the first wake-up signal, second wake-up signal, and third wake-up signal may be carried in system information or information sent by another network device through broadcast, or may be carried in unicast information, for example, a dedicated message such as a radio resource control release (RRC Release) message. This is not limited in this embodiment of this application. The configuration information of the first wake-up signal may indicate a radio resource (one or more of a time domain resource, a frequency domain resource, a code domain resource, or a space domain resource) of the first wake-up signal. The configuration information may further indicate that the configuration information is associated with the first wake-up signal or that the service state is the unicast service state. Similarly, the configuration information of the second wake-up signal may indicate a radio resource (one or more of a time domain resource, a frequency domain resource, a code domain resource, or a space domain resource) of the second wake-up signal. The configuration information may further indicate that the configuration information is associated with the second wake-up signal or the service state is the multicast service state. Similarly, the configuration information of the third wake-up signal may indicate a radio resource (one or more of a time domain resource, a frequency domain resource, a code domain resource, or a space domain resource) of the third wake-up signal. The configuration information may further indicate that the configuration information is associated with the third wake-up signal or the service state is the multicast service state. Correspondingly, the terminal device determines a detected wake-up signal based on the service state, and at least one of the configuration information of the first wake-up signal, the configuration information of the second wake-up signal, or the configuration information of the third wake-up signal.

S303: The network device 110 sends the first information to the terminal device.

Correspondingly, the terminal device 111 detects or receives the first information.

Specifically, for this step, refer to S103 or S203.

S304: The network device 110 sends the service notification information to the terminal device.

Correspondingly, the terminal device 111 receives the service notification information.

Specifically, for this step, refer to S104 or S204.

This step is optional.

In this embodiment of this application, the first wake-up signal corresponding to the unicast service, the second wake-up signal corresponding to the multicast service, and the third wake-up signal corresponding to the broadcast service are used, to reduce power consumption of the terminal device in the unicast service state. In addition, power consumption of the terminal device in the broadcast service state and power consumption of the terminal device in the multicast service state may also be reduced. For example, when the service state of the terminal device is the unicast service state, the terminal device detects the first wake-up signal, and further receive the first information and the service notification information only after the first wake-up signal is detected. If the first wake-up signal is not detected, the terminal device does not need to receive the corresponding first information and service notification information, to save power. Similarly, when the service state includes the multicast service state, the terminal device detects the second wake-up signal (or the first wake-up signal and the second wake-up signal), and further receives the first information and the service notification information only after the second wake-up signal (or the first wake-up signal and the second wake-up signal) is detected. If the second wake-up signal is not detected (or the first wake-up signal and the second wake-up signal are not detected), the terminal device does not need to receive the corresponding first information and service notification information, to save power. Similarly, when the service state includes the broadcast service state, the terminal device detects the third wake-up signal (or the third wake-up signal and the first wake-up signal and/or the second wake-up signal), and further receives the first information and the service notification information only after the third wake-up signal (or the third wake-up signal and the first wake-up signal and/or the second wake-up signal) is detected. If the third wake-up signal is not detected (or the first wake-up signal, the second wake-up signal, and the third wake-up signal are not detected), the terminal device does not need to receive the corresponding first information and service notification information, to save power.

In another embodiment of this application, the foregoing wake-up signals are further refined. For example, the second wake-up signal in the foregoing embodiment belongs to a set of second wake-up signals, and the set of second wake-up signals includes at least two second wake-up signals. Each second wake-up signal in the set of second wake-up signals is associated with one service attribute in a set of service attribute information, and the second wake-up signal in the set of second wake-up signals indicates first information.

In an implementation, a network device first sends configuration information of the set of second wake-up signals to a terminal device. The configuration information of the set of second wake-up signals includes configuration information of the at least two second wake-up signals. The configuration information of each second wake-up signal may indicate a radio resource (one of more of a time domain resource, a frequency domain resource, a code domain resource, or a space domain resource) of the corresponding second wake-up signal, and may further indicate that a service state associated with the second wake-up signal is a service state corresponding to one piece of service attribute information in the set of service attribute information. Correspondingly, the terminal device determines a detected second wake-up signal based on the service state and the configuration information of the set of second wake-up signals.

In an implementation, before the network device sends the configuration information of the set of second wake-up signals to the terminal device, the network device obtains the set of service attribute information from a core network. A process of this embodiment of this application is similar to the processes in FIG. 5, FIG. 7, and FIG. 9. Details are not described herein again. The following describes only content that is not described in the foregoing embodiments. In this embodiment of this application, the set of service attribute information includes at least one set of the following: a set of service identity information, a set of service type information, a set of quality of service QoS requirement information, or a set of service notification frequency information. The set of service attribute information includes at least two pieces of service attribute information. Further, the terminal device determines, based on the service state (or the service attribute information), to detect a second wake-up signal associated with the service attribute information in the set of second wake-up signals.

It may be understood that, when the service state of the terminal device includes a service state corresponding to one or more pieces of service attribute information, the terminal device detects one or more second wake-up signals associated with the one or more pieces of service attribute information.

For example, the set of service identity information may include at least two groups of multicast service identities, for example, TMGIs. Specifically, different TMGIs are grouped into groups, and each group of TMGIs represent one piece of service attribute information. Each group of TMGIs include at least one TMGI. For example, each TMGI may form a group. Alternatively, several TMGIs are grouped into one group based on values of the TMGIs. For example, TMGIs 0 to 5 are grouped into one group, and TMGIs 6 to 10 are grouped into one group. Alternatively, different TMGIs are grouped into a group based on values of TMGI Mod X, where Mod indicates a modulo operation, and X is a positive integer. Each group of multicast service identities are corresponding to one second wake-up signal. In this case, the service state of the terminal device includes a multicast service state. Specifically, the service state of the terminal device includes a service state corresponding to one or more pieces of service attribute information. For example, a current service state of the terminal device is a service state corresponding to service attribute information TMGIs 0 to 5, and the terminal device detects a second wake-up signal associated with the service attribute information TMGIs 0 to 5. Alternatively, the current service state of the terminal device is a service state corresponding to a TMGI whose service attribute information TMGI Mod 10 is 0, and the terminal device detects a second wake-up signal associated with the TMGI whose service attribute information TMGI Mod 10 is 0.

For example, the set of service type information may include at least one of public safety (public safety), vehicle-to-everything (vehicle-to-everything, V2X) communication, software delivery over wireless (software delivery over wireless), group communication (group communication), and an internet of things (Internet of Things). Each service type is associated with one second wake-up signal. In this case, the service state of the terminal device includes the multicast service state. Specifically, the service state of the terminal device includes a service state corresponding to one or more pieces of service attribute information. For example, a current service state of the terminal device is a service state corresponding to a public safety service type, and the terminal device detects a second wake-up signal associated with the public safety service type. Alternatively, the current service state of the terminal device is a service state corresponding to the V2X, and the terminal device detects a second wake-up signal associated with the V2X service type.

For example, the set of quality of service QoS requirement information may include at least two pieces of multicast service QoS requirement information. In an implementation, the multicast service QoS requirement information set includes low QoS requirement information and high QoS requirement information. The low QoS requirement information is associated with one second wake-up signal, and the high QoS requirement information is associated with another second wake-up signal. In this case, the service state of the terminal device includes the multicast service state. Specifically, the service state of the terminal device includes a service state corresponding to one or more pieces of service attribute information. For example, a current service state of the terminal device is a service state corresponding to the low QoS requirement information, and the terminal device detects the second wake-up signal associated with the low QoS requirement information. Alternatively, the current service state of the terminal device is a service state corresponding to the high QoS requirement information, and the terminal device detects the second wake-up signal associated with the high QoS requirement information.

In another implementation, that each piece of QoS requirement information in the multicast service QoS requirement information set includes a different 5QI. In this case, the service state of the terminal device includes the multicast service state. Specifically, the service state of the terminal device includes a service state corresponding to one or more pieces of service attribute information. For example, a current service state of the terminal device is a service state corresponding to 5QI=1, and the terminal device detects a second wake-up signal associated with 5QI=1.

For example, the set of service notification frequency information may include information that a service notification frequency is equal to or lower than a first threshold, or information that the service notification frequency is higher than or equal to a first threshold. The information is associated with one second wake-up signal. It may be understood that the service notification frequency may be divided into more groups based on a requirement. This is not limited in this application. It may be understood that different services may have different service notification frequencies. In this case, the service state of the terminal device includes the multicast service state. Specifically, the service state of the terminal device includes a service state corresponding to one or more pieces of service attribute information. For example, a current service state of the terminal device is a service state corresponding to a service notification frequency level equal to or lower than the first threshold, and the terminal device detects a second wake-up signal associated with the information that the service notification frequency level is equal to or lower than the first threshold. It may be understood that the second wake-up signal mentioned in this embodiment of this application may be replaced with a third wake-up signal, and the set of second wake-up signals may be replaced with a set of third wake-up signals. It may be further understood that, in this embodiment of this application, the second wake-up signals and the third wake-up signals may be separately refined. For example, the second wake-up signal belongs to the set of second wake-up signals, and each second wake-up signal in the set of second wake-up signals is associated with the service attribute in the set of service attribute information. The third wake-up signal belongs to the set of third wake-up signals, and each third wake-up signal in the set of third wake-up signals is associated with a service attribute in the set of service attribute information. For details, refer to the foregoing content in this embodiment of this application. Details are not described herein again.

In this embodiment of this application, the wake-up signals are further refined and grouped, so that power consumption of the terminal device in different service states can be reduced.

In an implementation solution, after receiving first information (for example, DCI used to schedule paging) indicating service notification information (for example, paging), the terminal device receives the service notification information based on the first information, and determines, based on content in the service notification information, whether the service notification information is related to the terminal device. For example, after receiving the service notification information, if the content in the service notification information includes only a multicast service and/or a broadcast service, the terminal device whose service state is a unicast service state determines that the service notification information is irrelevant to the terminal device. In this case, the terminal device has received the first information and the service notification information, increasing power consumption. Similarly, after the terminal device whose service state is the multicast service state receives the service notification information, if the content in the service notification information includes only the broadcast service, the terminal device determines that the service notification information is irrelevant to the terminal device. In this case, the terminal device has received the first information and the service notification information, increasing power consumption.

In view of this, another embodiment of this application provides an information sending and receiving method. In this embodiment of this application, a to-be-notified service type is indicated by using first information, and a terminal device may quickly obtain, based on the first information, whether service notification information is related to the terminal device, to reduce power consumption caused by receiving of service notification information irrelevant to the terminal device.

Specifically, in this embodiment of this application, the first information indicates the to-be-notified service type.

In an implementation, the to-be-notified service type may include only a broadcast service and/or a multicast service, or include the broadcast service and/or the multicast service and a unicast service. For example, 1 bit is used in the first information for indication. When a value of the 1 bit is 1, the service notification information is related only to the broadcast service and/or the multicast service. In this case, the terminal device whose service state is a unicast service state determines, based on the value of the 1 bit, not to receive the service notification information indicated by the first information. When the value of the 1 bit is 0, the service notification information is not only related to the broadcast service and/or the multicast service, and the terminal device in any service state receives the service notification information indicated by the first information. It may be understood that a correspondence between the value of the 1 bit and the to-be-notified service type may be changed. This is not limited in this application. This also applies to the following descriptions.

In another implementation, the to-be-notified service type may include the broadcast service and/or the multicast service, and/or the unicast service. For example, 2 bits are used in the first information for indication, and a value of 1 bit indicates whether the broadcast service and/or the multicast service are/is notified. For example, a value "1" indicates that the broadcast service and/or the multicast service are/is notified, and a value "0" indicates that the broadcast service and/or the multicast service are/is not notified. A value of the other 1 bit indicates whether the unicast service is notified. For example, a value "1" indicates that the unicast service is notified, and a value "0" indicates that the unicast service is not notified. Correspondingly, if a value of the 2 bits is "01", it indicates that the to-be-notified service type is that the broadcast service and/or the multicast service are/is not notified, but the unicast service is notified. A value "10" indicates that the to-be-notified service type is that the broadcast service and/or the multicast service are/is notified, but the unicast service is not notified. A value "11" indicates that the to-be-notified service type is that the broadcast service and/or the multicast service are/is notified, and the unicast service is also notified. Correspondingly, the terminal device determines, based on the service state and the value of the 2 bits in the first information, whether to receive the service notification information. For example, when the service state of the terminal device is the unicast service state, if the value of the 2 bits is "10", the terminal device determines not to receive the service notification information indicated by the first information. If the value of the 2 bits is "01" or "11", the terminal device determines to receive the service notification information indicated by the first information.

In another implementation, the to-be-notified service type may include at least one of the following: the broadcast service, the multicast service, or the unicast service. For example, 3 bits are used in the first information for indication, and a value of 1 bit indicates whether the broadcast service is notified. For example, a value "1" indicates that the broadcast service is notified, and a value "0" indicates that the broadcast service is not notified. A value of a second bit indicates whether the multicast service is notified. For example, a value "1" indicates that the multicast service is notified, and a value "0" indicates that the multicast service is not notified. A value of a third bit indicates whether the unicast service is notified. For example, a value "1" indicates that the unicast service is notified, and a value "0" indicates that the unicast service is not notified. Correspondingly, if a value of the 3 bits is "001", it indicates that the to-be-notified service type is that the broadcast service is not notified, the multicast service is not notified either, but the unicast service is notified. A value "110" indicates that the to-be-notified service type is that the broadcast service and the multicast service are notified, but the unicast service is not notified. A value "111" indicates that the to-be-notified service type is that the broadcast service, the multicast service, and the unicast service are notified. Correspondingly, the terminal device determines, based on the service state and the value of the 3 bits in the first information, whether to receive the service notification information. For example, when the service state of the terminal device is the unicast service state, if the value of the 3 bits is "110", the terminal device determines not to receive the service notification information indicated by the first information. If the value of the 3 bits is "001", "011", or "111", the terminal device determines to receive the service notification information indicated by the first information.

In another implementation, the to-be-notified service type includes at least one of the following: the broadcast service, at least one multicast service in a set of multicast services, or the unicast service. Each service in the set of multicast services is associated with one service attribute in the set of service attribute information in the foregoing embodiment. For example, a plurality of bits are used in the first information for indication, and a value of a first bit indicates whether the broadcast service is notified. For example, a value "1" indicates that the broadcast service is notified, and a value "0" indicates that the broadcast service is not notified. A value of a second bit indicates whether the unicast service is notified. For example, a value "1" indicates that the unicast service is notified, and a value "0" indicates that the unicast service is not notified. A value of the other bits indicates whether the at least one multicast service in the set of multicast services is notified. For example, assuming that one service attribute set includes two service attributes. In this case, the plurality of bits are 2 bits, and each bit indicates one service in the set of multicast services. For example, "10" indicates that the 1^{st} multicast service in the set of multicast services is notified, but the 2^{nd} multicast service in the set of multicast services is not notified, and "11" indicates that the 1^{st} multicast service and the 2^{nd} multicast service in the set of multicast services are notified. Correspondingly, the terminal device determines, based on the service state and a value of the plurality of bits in the first information, whether to receive the service notification information. An implementation method is similar to the foregoing descriptions. Details are not described again.

In another implementation, the to-be-notified service type includes at least one of the following: at least one broadcast service in a set of broadcast services, at least one multicast service in a set of multicast services, or the unicast service.

Each service in the set of broadcast services is associated with one service attribute in the set of service attribute information in the foregoing embodiment, and each service in the set of multicast services is associated with one service attribute in the set of service attribute information in the foregoing embodiment. Correspondingly, the terminal device determines, based on the service state and a value of the plurality of bits in the first information, whether to receive the service notification information. An implementation method is similar to the foregoing descriptions. Details are not described again.

This embodiment of this application may be implemented independently, or may be implemented in combination with the foregoing embodiment. This is not limited in this application. It may be understood that, for an implementation method in which the network device sends the wake-up signal, the first information, or the service notification information, refer to the descriptions of the network device in the foregoing embodiment. For an implementation method in which the terminal device receives the first information or the service notification information, refer to the descriptions of the terminal device in the foregoing embodiment. Details are not described herein again.

In this embodiment of this application, the to-be-notified service type is indicated by using the first information, and the terminal device may quickly obtain, based on the first information, whether the service notification information is related to the terminal device, to reduce power consumption caused by receiving of service notification information irrelevant to the terminal device.

In the several embodiments provided in this application, it should be understood that the disclosed system, apparatus, and method may be implemented in other manners. For example, the foregoing apparatus embodiments are merely examples. For example, division into the units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the technical effects of the solutions provided in embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part making contributions, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The readable-storage medium includes any medium that can store program code, such as a USB flash drive, a removable hard disk, a read-only memory (read-only memory, ROM), a random access memory (random access memory, RAM), a magnetic disk, or an optical disc.

In addition, this application further provides a computer program. The computer program is used to implement operations and/or processing performed by the terminal device in the information receiving and sending method provided in this application.

This application further provides a computer program. The computer program is used to implement operations and/or processing performed by the network device in the information receiving and sending method provided in this application.

This application further provides a computer-readable storage medium. The computer-readable storage medium stores computer code When the computer code is run on a computer, the computer is enabled to perform operations and/or processing performed by the terminal device in the information receiving and sending method provided in this application.

This application further provides a computer-readable storage medium. The computer-readable storage medium stores computer code When the computer code is run on a computer, the computer is enabled to perform operations and/or processing performed by the network device in the information receiving and sending method provided in this application.

This application further provides a computer program product. The computer program product includes computer code or a computer program. When the computer code or the computer program is run on a computer, operations and/or processing performed by the terminal device in the information receiving and sending method provided in this application are/is performed.

This application further provides a computer program product. The computer program product includes computer code or a computer program. When the computer code or the computer program is run on a computer, operations and/or processing performed by the network device in the information receiving and sending method provided in this application are/is performed.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information receiving method performed by a terminal device (111), comprising:
- determining (S101b, S201b, S301b) a service state of the terminal device (111),
- in response to determining that the terminal device is not interested in a multicast service, performing the following: determining, based on the service state, to detect (S102, S202, S302) a first wake-up information; and receiving (S103, S203, S303) from a network device (110) downlink control information in a paging occasion after a first wake-up information is detected;
- in response to determining that the terminal device is interested in a multicast service, performing the following:
- determining, based on the service state, not to detect the first wake-up information; and
- receiving (S103, S203, S303), from the network device (110), the downlink control information in a paging occasion without detecting the first wake-up information.

2. The method according to claim 1, the method further comprises:
receiving a configuration information of the first wake-up information, wherein the configuration information of the first wake-up information is carried in system information.

3. The method according to any one of claims 1-2, wherein the downlink control information is scrambled by paging-radio network temporary identity P-RNTI.

4. The method according to any one of claims 1-3, wherein after detecting the downlink control information, the method further comprises:
receiving (S104, S204, S304) a paging message.

5. The method according to any one of claims 1 to 4, wherein the downlink control information is used to indicate detecting (S104, S204, S304) service notification information.

6. An information sending method, performed by a network device (110), comprising:
- determining (S101a, S201a, S301a) a to-be-notified service type;
- determining whether a terminal device (111) to be paged supports the reception of wake-up signals;
- in response to determining that that the terminal device is not interested in a multicast service and that the terminal device (111) supports the reception of wake-up signals, performing the following:
- determining, based on the to-be-notified service type, to send (102, S202a, S302a) a first wake-up information to the terminal device (111),
- sending (S103, S203, S303) downlink control information to a terminal device (111) in a paging occasion that follows the first wake-up information;
- in response to determining that the terminal device is interested in a multicast service and that the terminal device (111) supports the reception of wake-up signals, performing the following:
- determining, based on the service state, not to send the first wake-up information to the terminal device (111); and
- sending (S103, S203, S303), to the terminal device (111), the downlink control information in a paging occasion without sending the first wake-up information.

7. The method according to claim 6, wherein,
in response to determining that the to-be-notified service type comprises a broadcast service and that the terminal device (111) supports the reception of wake-up signals, the method further comprises:
determining, based on the to-be-notified service type, to send (S302c) a third wake-up information to the terminal device (111), and
sending (S303), to the terminal device (111), the downlink control information in a paging occasion that follows the third wake-up information.

8. An information receiving apparatus (1000), comprising:
a transceiver unit (1200), and a processing unit (1100) configured to determine a service state of the information receiving apparatus; wherein
- in response to determining that the information receiving apparatus is not interested in a multicast service:
- the processing unit is further configured to determine, based on the service state, to detect a first wake-up information; and
- the transceiver unit is configured to receive, from a network device, downlink control information in a paging occasion after a first wake-up information is detected;
- in response to determining that the information receiving apparatus is interested in a multicast service:
- the processing unit is further configured to determine, based on the service state, not to detect the first wake-up information, and
- the transceiver unit is configured to receive, from the network device, the downlink control information in a paging occasion without detecting the first wake-up information.

## Patentansprüche

1. Informationsempfangsverfahren, durchgeführt durch eine Endgerätevorrichtung (111), das Folgendes umfasst:
- Bestimmen (S101b, S201b, S301b) eines Dienstzustands der Endgerätevorrichtung (111),
- als Reaktion darauf, dass bestimmt wird, dass die Endgerätevorrichtung nicht an einem Multicast-Dienst interessiert ist, Durchführen des Folgenden: Bestimmen, basierend auf dem Dienstzustand, eine erste Aufweck-Information zu detektieren (S102, S202, S302); und Empfangen (S103, S203, S303), von einer Netzvorrichtung (110), von Downlink-Steuerinformationen bei einer Paging-Gelegenheit nach Detektion einer ersten Aufweck-Information;
- als Reaktion darauf, dass bestimmt wird, dass die Endgerätevorrichtung an einem Multicast-Dienst interessiert ist, Durchführen des Folgenden:
- Bestimmen, basierend auf dem Dienstzustand, die erste Aufweck-Information nicht zu detektieren; und
- Empfangen (S103, S203, S303), von der Netzvorrichtung (110), der Downlink-Steuerinformationen bei einer Paging-Gelegenheit ohne Detektion der ersten Aufweck-Information.

2. Verfahren nach Anspruch 1, wobei das Verfahren ferner Folgendes umfasst:
Empfangen einer Konfigurationsinformation der ersten Aufweck-Information, wobei die Konfigurationsinformation der ersten Aufweck-Information in Systeminformationen geführt wird.

3. Verfahren nach einem der Ansprüche 1-2, wobei die Downlink-Steuerinformationen durch eine temporäre Paging-Funknetzidentität bzw. P-RNTI verwürfelt werden.

4. Verfahren nach einem der Ansprüche 1-3, wobei das Verfahren nach dem Detektieren der Downlink-Steuerinformationen ferner Folgendes umfasst:
Empfangen (S104, S204, S304) einer Paging-Nachricht.

5. Verfahren nach einem der Ansprüche 1 bis 4, wobei die Downlink-Steuerinformationen verwendet werden, um das Detektieren (S104, S204, S304) von Dienstbenachrichtigungsinformationen anzugeben.

6. Informationssendeverfahren, durchgeführt durch eine Netzvorrichtung (110), das Folgendes umfasst:
- Bestimmen (S101a, S201a, S301a) eines mitzuteilenden Diensttyps;
- Bestimmen, ob eine zu pagende Endgerätevorrichtung (111) den Empfang von Aufweck-Signalen unterstützt;
- als Reaktion darauf, dass bestimmt wird, dass die Endgerätevorrichtung nicht an einem Multicast-Dienst interessiert ist und dass die Endgerätevorrichtung (111) den Empfang von Aufweck-Signalen unterstützt, Durchführen des Folgenden:
- Bestimmen, basierend auf dem mitzuteilenden Diensttyp, eine erste Aufweck-Information an die Endgerätevorrichtung (111) zu senden (102, S202a, S302a),
- Senden (S103, S203, S303) von Downlink-Steuerinformationen an eine Endgerätevorrichtung (111) bei einer Paging-Gelegenheit, die auf die erste Aufweck-Information folgt;
- als Reaktion darauf, dass bestimmt wird, dass die Endgerätevorrichtung an einem Multicast-Dienst interessiert ist und dass die Endgerätevorrichtung (111) den Empfang von Aufweck-Signalen unterstützt, Durchführen des Folgenden:
- Bestimmen, basierend auf dem Dienstzustand, die erste Aufweck-Information nicht an die Endgerätevorrichtung (111) zu senden; und
- Senden (S103, S203, S303), an die Endgerätevorrichtung (111), der Downlink-Steuerinformationen bei einer Paging-Gelegenheit ohne Senden der ersten Aufweck-Information.

7. Verfahren nach Anspruch 6, wobei
das Verfahren als Reaktion darauf, dass bestimmt wird, dass der mitzuteilende Diensttyp einen Broadcast-Dienst umfasst und dass die Endgerätevorrichtung (111) den Empfang von Aufweck-Signalen unterstützt, ferner Folgendes umfasst:
Bestimmen, basierend auf dem mitzuteilenden Diensttyp, eine dritte Aufweck-Information an die Endgerätevorrichtung (111) zu senden (S302c), und
Senden (S303), an die Endgerätevorrichtung (111), der Downlink-Steuerinformationen bei einer Paging-Gelegenheit, die auf die dritte Aufweck-Information folgt.

8. Informationsempfangseinrichtung (1000), die Folgendes umfasst:
eine Sendeempfängereinheit (1200) und eine Verarbeitungseinheit (1100), ausgelegt zum Bestimmen eines Dienstzustands der Informationsempfangseinrichtung; wobei
- als Reaktion darauf, dass bestimmt wird, dass die Informationsempfangseinrichtung nicht an einem Multicast-Dienst interessiert ist:
- die Verarbeitungseinheit ferner ausgelegt ist zum Bestimmen, basierend auf dem Dienstzustand, eine erste Aufweck-Information zu detektieren; und
- die Sendeempfängereinheit ausgelegt ist zum Empfangen, von einer Netzvorrichtung, von Downlink-Steuerinformationen bei einer Paging-Gelegenheit nach Detektion einer ersten Aufweck-Information;
- als Reaktion darauf, dass bestimmt wird, dass die Informationsempfangseinrichtung an einem Multicast-Dienst interessiert ist:
- die Verarbeitungseinheit ferner ausgelegt ist zum Bestimmen, basierend auf dem Dienstzustand, die erste Aufweck-Information nicht zu detektieren, und
- die Sendeempfängereinheit ausgelegt ist zum Empfangen, von der Netzvorrichtung, der Downlink-Steuerinformationen bei einer Paging-Gelegenheit ohne Detektion der ersten Aufweck-Information.

## Revendications

1. Procédé de réception d'informations réalisé par un dispositif terminal (111), comprenant :
- la détermination (S101b, S201b, S301b) d'un état de service du dispositif terminal (111),
- en réponse à la détermination que le dispositif terminal ne s'intéresse pas à un service en mode multicast, la réalisation de ce qui suit : la détermination, sur la base de l'état de service, de détecter (S102, S202, S302) une première information de réveil ; et la réception (S103, S203, S303), depuis un dispositif de réseau (110), d'informations de contrôle en liaison descendante lors d'une occasion de paging après détection d'une première information de réveil ;
- en réponse à la détermination que le dispositif terminal s'intéresse à un service en mode multicast, la réalisation de ce qui suit :
- la détermination, sur la base de l'état de service, de ne pas détecter la première information de réveil ; et
- la réception (S103, S203, S303), depuis le dispositif de réseau (110), des informations de contrôle en liaison descendante lors d'une occasion de paging sans détecter la première information de réveil.

2. Procédé selon la revendication 1, le procédé comprenant en outre :
la réception d'une information de configuration de la première information de réveil, l'information de configuration de la première information de réveil étant véhiculée dans des informations système.

3. Procédé selon l'une quelconque des revendications 1 à 2, dans lequel les informations de contrôle en liaison descendante sont embrouillées à l'aide d'une identité temporaire de réseau radio - paging, dite P-RNTI.

4. Procédé selon l'une quelconque des revendications 1 à 3, le procédé comprenant en outre, après détection des informations de contrôle en liaison descendante :
la réception (S104, S204, S304) d'un message de paging.

5. Procédé selon l'une quelconque des revendications 1 à 4, dans lequel les informations de contrôle en liaison descendante sont utilisées pour indiquer la détection (S104, S204, S304) d'informations de notification de service.

6. Procédé d'envoi d'informations, réalisé par un dispositif de réseau (110), comprenant :
- la détermination (S101a, S201a, S301a) d'un type de service à notifier ;
- la détermination si un dispositif terminal (111) objet d'un paging prend ou non en charge la réception de signaux de réveil ;
- en réponse à la détermination que le dispositif terminal ne s'intéresse pas à un service en mode multicast et que le dispositif terminal (111) prend en charge la réception de signaux de réveil, la réalisation de ce qui suit :
- la détermination, sur la base du type de service à notifier, d'envoyer (102, S202a, S302a) une première information de réveil au dispositif terminal (111),
- l'envoi (S103, S203, S303) d'informations de contrôle en liaison descendante à un dispositif terminal (111) lors d'une occasion de paging qui suit la première information de réveil ;
- en réponse à la détermination que le dispositif terminal s'intéresse à un service en mode multicast et que le dispositif terminal (111) prend en charge la réception de signaux de réveil, la réalisation de ce qui suit :
- la détermination, sur la base de l'état de service, de ne pas envoyer la première information de réveil au dispositif terminal (111) ; et
- l'envoi (S103, S203, S303), au dispositif terminal (111), des informations de contrôle en liaison descendante lors d'une occasion de paging sans envoyer la première information de réveil.

7. Procédé selon la revendication 6, le procédé comprenant en outre, en réponse à la détermination que le type de service à notifier comprend un service en mode multicast et que le dispositif terminal (111) prend en charge la réception de signaux de réveil :
la détermination, sur la base du type de service à notifier, d'envoyer (S302c) une troisième information de réveil au dispositif terminal (111), et
l'envoi (S303), au dispositif terminal (111), des informations de contrôle en liaison descendante lors d'une occasion de paging qui suit la troisième information de réveil.

8. Appareil (1000) de réception d'informations, comprenant :
une unité émettrice-réceptrice (1200), et une unité de traitement (1100) configurée pour déterminer un état de service de l'appareil de réception d'informations ; dans lequel
- en réponse à la détermination que l'appareil de réception d'informations ne s'intéresse pas à un service en mode multicast :
- l'unité de traitement est configurée en outre pour déterminer, sur la base de l'état de service, de détecter une première information de réveil ; et
- l'unité émettrice-réceptrice est configurée pour recevoir, depuis un dispositif de réseau, des informations de contrôle en liaison descendante lors d'une occasion de paging après détection d'une première information de réveil ;
- en réponse à la détermination que l'appareil de réception d'informations s'intéresse à un service en mode multicast :
- l'unité de traitement est configurée en outre pour déterminer, sur la base de l'état de service, de ne pas détecter la première information de réveil ; et
- l'unité émettrice-réceptrice est configurée pour recevoir, depuis le dispositif de réseau, des informations de contrôle en liaison descendante lors d'une occasion de paging sans détecter la première information de réveil.
